# EUROPÄISCHE PATENTSCHRIFT

(11) **EP 1 422 430 B1**
(45) Veröffentlichungstag und Bekanntmachung des Hinweises auf die Patenterteilung: **30.11.2005**
(21) Anmeldenummer: 03025881.8
(22) Anmeldetag: 12.11.2003
(51) Int. Cl.: F16D 13/52, F16D 13/68

(54) **Kfz-Getriebe mit Lamellenkupplung**
Motor vehicle transmission with multi-disc clutch
Transmission de véhicule avec embrayage à multi-disques

(30) Priorität: 19.11.2002 DE 10254014; 04.03.2003 DE 10309566
(43) Veröffentlichungstag der Anmeldung: 26.05.2004
(73) Patentinhaber: Volkswagen Aktiengesellschaft, 38436 Wolfsburg (DE); BorgWarner Inc., Auburn Hills MI 48326 (US)
(72) Erfinder: Gerathewohl, Rainer, 76149 Karlsruhe (DE); Becker, Volker, 38518 Gifhorn (DE); Steinberg, Ingo, Dr., 38547 Calberlah (DE); Schmidt, Andreas, Dr., 32602 Vlotho (DE)
(74) Vertreter: Döring, Sven-Uwe

(56) Entgegenhaltungen:
- DE-A- 10 118 233
- US-A- 6 044 948
- US-A- 6 145 643

## Beschreibung

Die Erfindung betrifft ein Kfz-Getriebe mit einer schließ- und trennbaren Kupplung, die als Lamellenkupplung ausgebildet ist, bei der ein Lamellenträger an einem Zylinderabschnitt lamellenseitig über den Umfang verteilt wechselweise Axialnuten und Axialstege aufweist und einseitig axial endseitig über eine Mitnehmerscheibe mit einer Nabe in Verbindung steht, und bei der zur Übertragung eines Drehmomentes eine drehfeste Verbindung zwischen der Mitnehmerscheibe und dem Lamellenträger über eine Steckverzahnung besteht, bei der am Außenumfang der Mitnehmerscheibe angeordnete radiale Zähne in korrespondierende radiale Ausnehmungen des Lamellenträgers hineinragen.

Lamellenkupplungen sind in unterschiedlicher Ausbildung und Anordnung bekannt, beispielsweise aus der DE 101 10 145 A1 und den dort genannten Patent- und Offenlegungsschriften. Eine Lamellenkupplung weist mehrere kreisscheibenförmige Außenlamellen, die an ihrem Außenumfang mit radialen Außenzähnen versehen sind und damit axial verschiebbar und drehfest in inneren Axialnuten eines trommelförmigen Außenlamellenträgers gelagert sind, und mehrere kreisscheibenförmige Innenlamellen auf, die an ihrem Innenumfang mit radialen Innenzähnen versehen sind und damit axial verschiebbar und drehfest in äußeren Axialnuten eines zylindrischen Innenlamellenträgers gelagert sind. Die Außen- und Innenlamellen sind axial wechselweise angeordnet und befinden sich durch umgebendes Hydrauliköl in einem Ölbad. Durch eine Duckerhöhung des Hydrauliköls werden die Lamellen axial aneinander angedrückt, wodurch die Kupplung zur reibschlüssigen Übertragung eines Drehmomentes zwischen dem Außenlamellenträger und dem Innenlamellenträger geschlossen wird. Entsprechend wird die Lamellenkupplung durch eine Druckabsenkung bzw. Drucklosschaltung des Hydrauliköls geöffnet.

Vorliegend wird von einer Lamellenkupplung ausgegangen, bei der ein Lamellenträger an einem Zylinderabschnitt lamellenseitig über den Umfang verteilt wechselweise Axialnuten und Axialstege aufweist und einseitig axial endseitig über eine Mitnehmerscheibe mit einer Nabe in Verbindung steht, und bei der zur Übertragung eines Drehmomentes eine drehfeste Verbindung zwischen der Mitnehmerscheibe und dem Lamellenträger über eine Steckverzahnung besteht, bei der am Außenumfang der Mitnehmerscheibe angeordnete radiale Zähne in korrespondierende radiale Ausnehmungen des Lamellenträgers hineinragen. Bei dem Lamellenträger kann es sich sowohl um einen Außenlamellenträger als auch einen Innenlamellenträger handeln, wobei die Axialnuten jeweils zur Aufnahme der Lamellenzähne der betreffenden Lamellen dienen. Insbesondere im Fall eines Außenlamellenträgers sind wegen der relativ großen Abmessungen sowohl der Lamellenträger als auch die Mitnehmerscheibe aus Gewichts- und Kostengründen zumeist als Blechpress- und -stanzbauteile ausgebildet. Eine Steckverzahnung zwischen der Mitnehmerscheibe und dem Lamellenträger einer Lamellenkupplung ist beispielsweise aus der DE 101 18 233 A1 bekannt.

Nach dem Stand der Technik sind derartige Steckverzahnungen zum Ausgleich von Wärmedehnung des Lamellenträgers und von betriebsbedingten Axialbewegungen der Mitnehmerscheibe axial spielbehaftet ausgebildet, z.B. indem das Axialspiel der Zähne der Mitnehmerscheibe, wie in der DE 33 21 659 A1 beschrieben, beidseitig durch einen in bzw. auf dem Lamellenträger befestigten Sicherungsring oder durch andere Erhebungen des Lamellenträgers begrenzt wird. In Verbindung mit einem Kfz-Getriebe, bei dem die Mitnehmerscheibe die Aufgabe hat, das von einem Antriebsmotor, insbesondere einem Verbrennungskolbenmotor, erzeugte Drehmoment in den Lamellenträger einer als Motorkupplung wirksamen Lamellenkupplung einzuleiten, ist ein vorhandenes Axialspiel aber eher von Nachteil. Bedingt durch die Arbeitsweise eines Verbrennungskolbenmotors liegt das abgegebene Drehmoment nicht gleichförmig über dem Drehwinkel an, sondern verläuft abhängig von der Anzahl und Anordnung der Zylinder entsprechend den Gaskräften in den einzelnen Zylinderbrennräumen schwellend. Hinzu kommt, dass der Kurbelwelle des Verbrennungskolbenmotors durch die wirksamen Gaskräfte eine periodische Durchbiegung aufgezwungen wird, die eingangsseitig in das Getriebe bzw. die vorgeschaltete Motorkupplung übertragen wird und zu einer Taumelbewegung der Mitnehmerscheibe führt. Diese Taumelbewegung verursacht bei einer axial spielbehafteten Mitnehmerscheibe ein axiales Gleiten zwischen den Zähnen der Mitnehmerscheibe und den Ausnehmungen des Lamellenträgers, wodurch an den betreffenden Kontaktflächen nachteilig größerer Verschleiß verbunden mit erhöhtem Zahnflankenspiel und verstärkter Geräuschentwicklung auftritt.

Es ist daher das Problem der vorliegenden Erfindung, eine Lamellenkupplung der eingangs genannten Art, die als Bestandteil eines Kfz-Getriebes insbesondere als Motorkupplung verwendet werden soll, derart zu verbessern, dass die Mitnehmerscheibe in einer möglichst platzsparenden und kostengünstigen Art und Weise axial festgelegt ist.

Das Problem wird erfindungsgemäß in Verbindung mit dem Oberbegriff des Anspruchs 1 dadurch gelöst, dass die Mitnehmerscheibe axial spielfrei mit dem Lamellenträger verbunden ist, indem die Ausnehmungen des Lamellenträgers als endseitig axial offene Aussparungen ausgebildet sind, durch die erste Zähne (Lastzähne) der Mitnehmerscheibe radial hindurchgreifen und mit ihren axialen Innenseiten anliegen, und indem der Lamellenträger axial endseitig einen formschlüssig gelagerten Sicherungsring aufweist, an dem zweite Zähne (Lagerzähne) der Mitnehmerscheibe mit ihren axialen Außenseiten anliegen.

Vorteilhafte Ausgestaltungen des erfindungsgemäßen Kfz-Getriebes sind in den Unteransprüchen 2 bis 12 aufgeführt.

Durch die Ausbildung der Ausnehmungen als endseitig axial offene Aussparungen, die bei einem als Blechpress- und -stanzbauteil ausgebildeten Lamellenträger einfach und preisgünstig durch Ausstanzen erzeugbar sind, kann die Mitnehmerscheibe nach der Montage der zugeordneten Lamellen einfach durch axiales Aufschieben montiert und durch Einsetzen des Sicherungsrings gesichert werden. Durch die Dimensionierung des axialen Abstandes der axialen Innenwände der Aussparungen zu der axialen Innenseite des montierten Sicherungsringes entsprechend der Wandstärke der Mitnehmerscheibe bzw. der Zähne ergibt sich auf einfache und platzsparende Weise eine axial spielfreie Verbindung der Mitnehmerscheibe mit dem Lamellenträger, bei der ein Drehmoment von der Mitnehmerscheibe formschlüssig im wesentlichen über die Lastzähne und die umfangsseitigen Innenwände der Aussparungen auf den Lamellenträger übertragen wird. Die innere axiale Abstützung der Mitnehmerscheibe erfolgt ebenfalls über die Lastzähne durch Anliegen der axialen Innenseiten der Lastzähne an den betreffenden axialen Innenflächen der Aussparungen. Die äußere axiale Abstützung der Mitnehmerscheibe erfolgt dagegen im wesentlichen über die Lagerzähne durch Anliegen der axialen Außenseiten der Lagerzähne an der Innenseite des eingesetzten Sicherungsringes, was zu einer Entlastung der Lastzähne führt.

Zur Begrenzung der radialen Abmessungen der Lamellenkupplung sind die Aussparungen zweckmäßig jeweils mittig in den lamellenseitigen Axialstegen des Lamellenträgers angeordnet. Hierdurch wird erreicht, dass die Lastzähne ohne radialen Überstand ausreichend hoch ausgebildet werden können, um eine wärmedehnungsbedingte Vergrößerung des Lamellenträgerdurchmessers sicher auszugleichen. Dies bedeutet, dass die Lastzähne vorteilhaft bei einem Außenlamellenträger die Außenkontur und bei einem Innenlamellenträger die Innenkontur des Lamellenträgers nicht radial überschreiten. Der Lamellenträger kann dabei sowohl als Massivbauteil (Guss- oder Fräsbauteil) als auch als Blechpress- und -stanzbauteil ausgebildet sein.

Zur Begrenzung der Belastung der Mitnehmerscheibe bestehen die Lagerzähne zweckmäßig jeweils aus zwei Lagerzungen, die vorteilhaft derart ausgebildet und angeordnet sind, dass sie die Seitenflanken jeweils eines lamellenseitigen Axialsteges umfangsseitig umfassen. Hierdurch wird einerseits die tragende Querschnittsfläche der Lagerzähne entlastend vergrößert. Andererseits können die Lagerzähne bzw. Lagerzungen über einen formschlüssigen Kontakt mit den Flanken der Axialstege zusätzlich zu den Lastzähnen zur formschlüssigen Übertragung eines Drehmomentes zwischen der Mitnehmerscheibe und dem Lamellenträger genutzt werden. Zur Begrenzung der Belastung der Mitnehmerscheibe und des Lamellenträgers, insbesondere zur Vermeidung einer die Stabilität beeinträchtigenden axial endseitigen Zerklüftung des Lamellenträgers, weist zweckmäßig die Mitnehmerscheibe zwischen den Lagerzungen der Lagerzähne jeweils keinen Lastzahn und der Lamellenträger an den den Lagerzungen der Lagerzähne unmittelbar benachbarten Axialstegen jeweils keine Aussparung auf.

In einer bevorzugten Ausführung der Lamellenkupplung sind zur gleichmäßigen Verteilung von Last- und Lagerkräften die Lastzähne und die Lagerzähne wechselweise gleichmäßig über den Außenumfang der Mitnehmerscheibe verteilt. Insbesondere ist vorgesehen, dass die Mitnehmerscheibe an ihrem Außenumfang anstelle jedes dritten Lastzahns jeweils einen Lagerzahn aufweist.

Zur Vereinfachung der Montage der Mitnehmerscheibe und des Sicherungsrings sind die für die beidseitige Anordnung der Lagerzungen vorgesehenen Axialstege des Lamellenträgers vorteilhaft axial endseitig verlängert und weisen in dem verlängerten Bereich zur Aufnahme des Sicherungsrings zweckmäßig jeweils einen Abschnitt einer Ringnut auf. Die Ringnut kann bei einer Ausbildung des Lamellenträgers als Massivbauteil auf einfache Weise durch Ausdrehen hergestellt werden. Bei einer Ausbildung des Lamellenträgers als Blechpress- und -stanzbauteil kann die Ringnut auf einfache Weise durch teilweises Ausstanzen und Einpressen entsprechender Abschnitte der Axialstege des Lamellenträgers erzeugt werden.

In einer bevorzugten Ausführung der Lamellenkupplung weisen die Lastzähne der Mitnehmerscheibe zur Vermeidung von wärmedehnungsbedingtem Zahnflankenspiel radial außen jeweils beidseitig umfangsseitige Erweiterungen mit Innenkeilflächen auf, die bei einer Aufweitung des Lamellenträgers zum Anliegen an die umfangsseitigen Innenwände der Aussparungen vorgesehen sind. Bei einer betriebsbedingten Erwärmung der Lamellenkupplung und auf Grund der mit zunehmender Drehzahl steigenden Zentrifugalkräfte dehnt sich der Lamellenträger umfangsseitig und damit auch radial aus, was zu einer umfangsseitigen Erweiterung der Aussparungen und bei Verwendung von weitgehend rechteckigen Lastzähnen zu einem unerwünschten Zahnflankenspiel zwischen den Lastzähnen der Mitnehmerscheibe und den umfangsseitigen Innenwänden der Aussparungen des Lamellenträgers führt. Da sich die Mitnehmerscheibe bei Erwärmung radial weniger stark ausdehnt als der Lamellenträger, kommen bei Verwendung der bevorzugten Ausbildung der Lastzähne bei einer betriebsbedingten Erwärmung die Innenkeilflächen der Lastzähne in Kontakt mit den umfangsseitigen Innenwänden der Aussparungen, wodurch das Zahnflankenspiel verhindert oder zumindest stark reduziert wird.

Zumeist werden bei der Montage der Lamellenkupplung durch eine axiale Justierung der Mitnehmerscheibe Fertigungstoleranzen der betreffenden Bauteile ausgeglichen und ein betriebsbedingt erforderliches Axialspiel der Lamellen eingestellt. Dies kann beispielsweise durch die Verwendung eines von mehreren axial unterschiedlich dicken Sicherungsringen erfolgen, was aber relativ umständlich und aufwendig ist. Es ist daher wesentlich einfacher und kostengünstiger, wenn zur Axialjustierung der Mitnehmerscheibe auf der Nabe die Nabe mit einem Absatz mit einer Außenzylinderfläche und die Mitnehmerscheibe mit einer Zentralbohrung mit einer korrespondierenden Innenzylinderfläche versehen werden, und die Nabe und die Mitnehmerscheibe in einer justierten Axialposition im Kontaktbereich des Absatzes und der Zentralbohrung miteinander verschweißt werden.

Die erfindungsgemäße Lamellenkupplung ist bevorzugt für die Verwendung als Motorkupplung eines automatisierten Schaltgetriebes vorgesehen, insbesondere aber für die Verwendung als Motorkupplung eines Doppelkupplungsgetriebes, da druckgesteuerte Lamellenkupplungen thermisch hoch belastbar und die Zeitverläufe des übertragbaren Drehmomentes, insbesondere bei der Steuerung der Kupplungsüberschneidung bei einem Schaltvorgang eines Doppelkupplungsgetriebes, besonders gut steuerbar sind. Es ist jedoch auch möglich, die erfindungsgemäße Lamellenkupplung als Schaltelement (Schaltkupplung und / oder Schaltbremse) eines Wandlerautomaten zu verwenden.

Weitere Einzelheiten der Erfindung ergeben sich aus der nachfolgenden ausführlichen Beschreibung und den beigefügten Zeichnungen, die beispielhaft zur Erläuterung des erfindungsgemäßen Kfz-Getriebes dienen.

Hierzu zeigen:
- Fig. 1: Einen Lamellenträger einer Lamellenkupplung des Kfz-Getriebes in perspektivischer Darstellung,
- Fig. 2: eine erste Ausführung einer Mitnehmerscheibe der Lamellenkupplung nach Fig. 1 mit einer Nabe und einem Sicherungsring in perspektivischer Darstellung,
- Fig. 3: eine zweite Ausführung der Mitnehmerscheibe der Lamellenkupplung nach Fig. 1 mit der Nabe und dem Sicherungsring in perspektivischer Darstellung, und
- Fig. 4: den Lamellenträger, die Mitnehmerscheibe, den Sicherungsring, und die Nabe der Lamellenkupplung nach Fig. 1 bis Fig. 3 im montierten Zustand in einer radialen Schnittansicht.

Eine Lamellenkupplung 1 umfasst als Bauteile u.a. einen Lamellenträger 2, eine Mitnehmerscheibe 3, einen Sicherungsring 4 und eine Nabe 5.

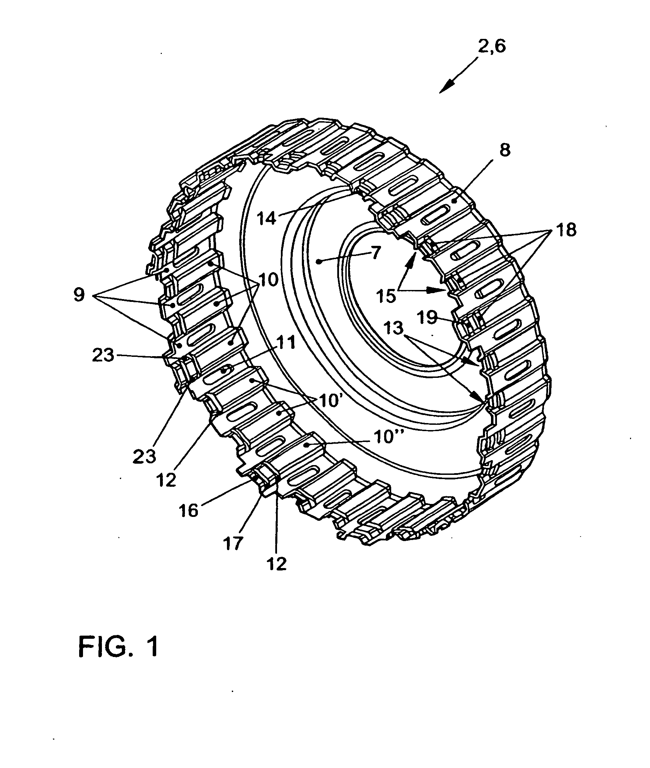

Der Lamellenträger 2 nach Fig. 1 ist vorliegend als topfförmiger Außenlamellenträger 6 mit einem kreisscheibenförmigen Boden 7 und einem zylindermantelförmigen Zylinderabschnitt 8 ausgebildet. Der Außenlamellenträger 6 ist als Blechpress- und -stanzbauteil ausgebildet und weist an dem Zylinderabschnitt 8 radial innen über den Umfang verteilt wechselweise Axialnuten 9 und Axialstege 10 auf. Die Axialnuten 9 sind für den Eingriff von radialen Außenzähnen mehrerer nicht abgebildeter Außenlamellen vorgesehen und in etwa mittig mit Öffnungen 11 zur radialen Durchströmung von Hydrauliköl versehen. Die Axialstege 10 weisen im Bereich ihres freien Endes eine insgesamt umlaufende Ringnut 12 auf, die zur Aufnahme eines das Axialspiel der Außenlamellen begrenzenden nicht abgebildeten Sicherungsrings vorgesehen ist. Des weiteren weist jeder erste und zweite Axialsteg 10' an seinem freien Ende eine endseitig offene Aussparung 13 mit einer axialen Innenwand 14 und zwei umfangsseitigen Innenwänden 15 auf. Jeder dritte Axialsteg 10" ist axial endseitig verlängert und weist in dem verlängerten Bereich 16 einen Abschnitt einer Ringnut 17 auf, die zur Lagerung des Sicherungsrings 4 vorgesehen ist. Die Ringnuten 12, 17 sind vorliegend jeweils durch teilweises radiales Ausstanzen und Ein- bzw. Auspressen entsprechender Segmente 18, 19 der Axialstege 10 hergestellt.

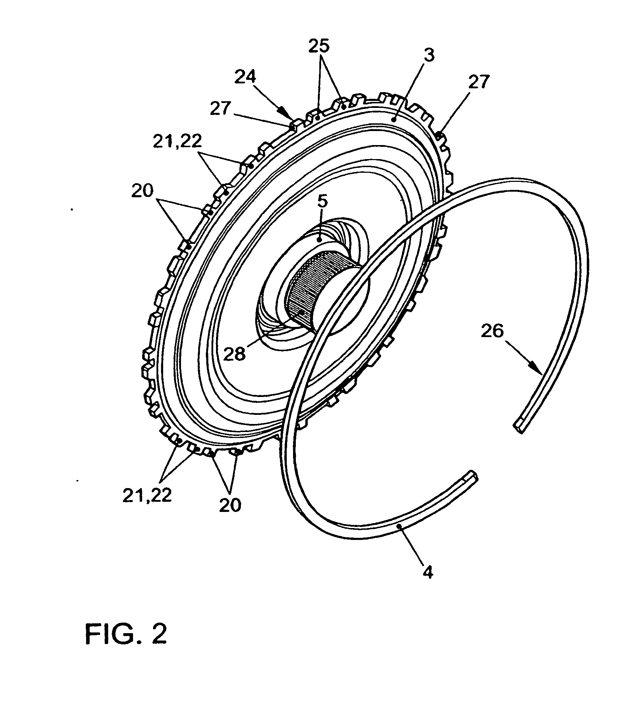

In Fig. 2 ist eine erste Ausführung der Mitnehmerscheibe 3 zusammen mit der Nabe 5 und dem Sicherungsring 4 abgebildet. Die Mitnehmerscheibe 3 weist an ihrem Außenumfang Zähne 20, 21 auf, die in Lastzähne 20 und Lagerzähne 21 unterschieden sind. Über den Außenumfang der Mitnehmerscheibe 3 gleichmäßig verteilt ist jeder erste und zweite Zahn als Lastzahn 20 und jeder dritte Zahn als Lagerzahn 21 ausgebildet. Die Lastzähne 20 weisen in axialer Ansicht einen weitgehend rechteckigen Querschnitt auf, sind zum Eingriff in die Aussparungen 13 des Lamellenträgers 2 vorgesehen, und dienen im wesentlichen der Übertragung eines Drehmomentes zwischen der Mitnehmerscheibe 3 und dem Lamellenträger 2. Die Lagerzähne 21 bestehen jeweils aus zwei symmetrisch zueinander ausgebildeten und angeordneten Lagerzungen 22, die zur umfangsseitig benachbarten Anordnung an den Seitenflanken 23 jeweils eines Axialsteges 10 vorgesehen sind und im wesentlichen zur axialen Abstützung gegenüber dem Sicherungsring 4 dienen. Durch entsprechende Dimensionierung und Anordnung der Aussparungen 13 und der Ringnut 17 des Lamellenträgers 2, des Sicherungsrings 4, sowie der Lastzähne 20 und der Lagerzähne 21 der Mitnehmerscheibe 3 wird erreicht, dass die Mitnehmerscheibe 3 im montierten Zustand axial spielfrei mit dem Lamellenträger 2 verbunden ist. Die axialen Innenseiten 24 der Lastzähne 20 stützen sich dabei radial innen gegen die axialen Innenwände 14 der Aussparungen 13 ab, wogegen sich die axialen Außenseiten 25 der Lagerzähne 21 bzw. Lagerzungen 22 gegenüber der axialen Innenseite 26 des Sicherungsrings 4 abstützen. Aufgrund des radialen Durchgreifens der Lastzähne 20 durch die Aussparungen 13 wird ein Drehmoment zwischen der Mitnehmerscheibe 3 und dem Lamellenträger 2 formschlüssig durch den Kontakt der umfangsseitigen Flanken 27 der Lastzähne 20 mit den umfangsseitigen Innenwänden 15 der Aussparungen 13 übertragen. Die Nabe 5 weist zur antriebsseitigen Einleitung eines Drehmomentes ein Außenverzahnung 28 und zur Lagerung in einem antriebsseitigen Führungslager einen Lagerzapfen 29 auf.

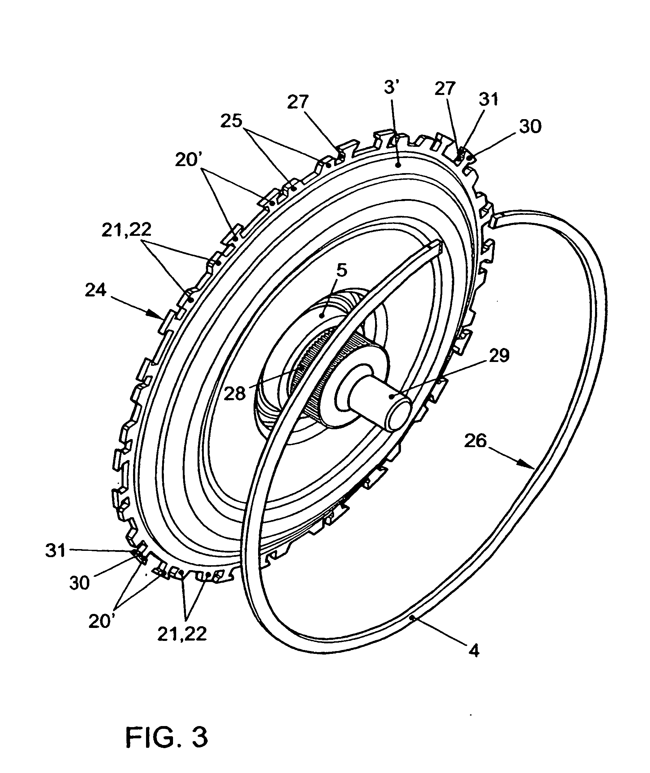

In Fig. 3 ist eine zweite Ausführung der Mitnehmerscheibe 3' zusammen mit der Nabe 5 und dem Sicherungsring 4 abgebildet. Die Mitnehmerscheibe 3' unterscheidet sich nur durch andersartige Lastzähne 20' von der Mitnehmerscheibe 3 nach Fig. 2. Vorliegend weisen die Lastzähne 20' radial außen jeweils beidseitig umfangsseitige Erweiterungen 30 mit Innenkeilflächen 31 auf, die bei einer Aufweitung des Lamellenträgers 2 zum Anliegen an die umfangsseitigen Innenwände 15 der Aussparungen 13 vorgesehen sind. Bei einer betriebsbedingten Erwärmung der Lamellenkupplung 1 oder auf Grund der Zentrifugalkräfte auf den sich drehenden Lamellenträger 2 wirkend dehnt sich dieser umfangsseitig und damit auch radial aus, was zu einer umfangsseitigen Erweiterung der Aussparungen 13 und bei Verwendung von weitgehend rechteckigen Lastzähnen 20 nach Fig. 2 zu einem unerwünschten Zahnflankenspiel zwischen den Lastzähnen 20 der Mitnehmerscheibe 3 und den umfangsseitigen Innenwänden 15 der Aussparungen 13 des Lamellenträgers 2 führt. Da sich die Mitnehmerscheibe 3' bei Erwärmung radial weniger stark ausdehnt als der Lamellenträger 2, kommen bei Verwendung der vorliegenden Ausbildung der Lastzähne 20' nach Fig. 3 bei einer betriebsbedingten Erwärmung die Innenkeilflächen 31 der Lastzähne 20' in Kontakt mit den umfangsseitigen Innenwänden 15 der Aussparungen 13, wodurch ein wärmedehnungsbedingtes und fliehkraftbedingtes Zahnflankenspiel verhindert oder zumindest stark reduziert wird.

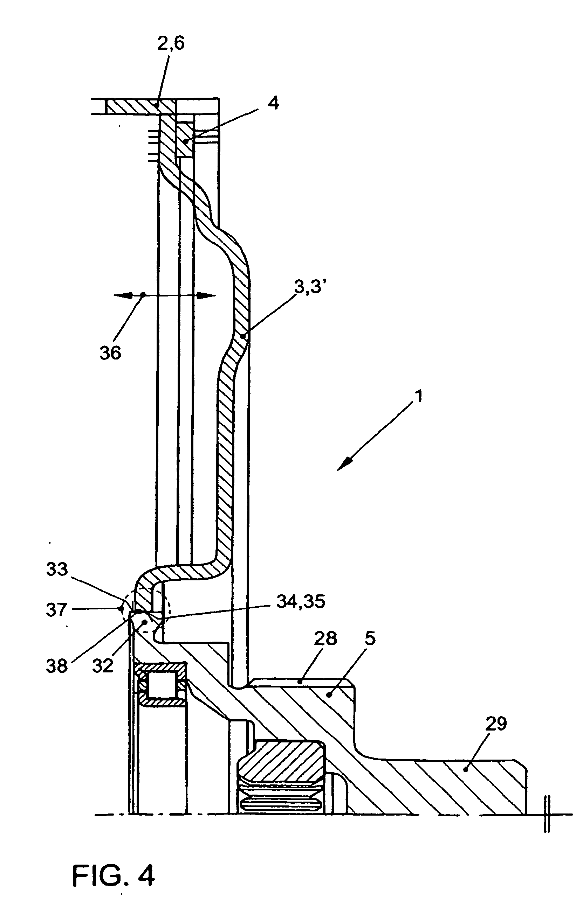

In Fig. 4 sind der Lamellenträger 2, die Mitnehmerscheibe 3, 3', der Sicherungsring 4, und die Nabe 5 in einer radialen Schnittansicht in montiertem Zustand dargestellt. Es ist erkennbar, dass die Nabe 5 einen Absatz 32 mit einer Außenzylinderfläche 33 und die Mitnehmerscheibe 3, 3' eine Zentralbohrung 34 mit einer korrespondierenden Innenzylinderfläche 35 aufweisen. Die Mitnehmerscheibe 3, 3' kann somit durch eine Axialverschiebung 36 gegenüber der Nabe 5 axial justiert und in der justierten Axialposition im Kontaktbereich 37 des Absatzes 32 und der Zentralbohrung 34 miteinander verschweißt werden, was vorliegend durch eine Schweißung 38, vorzugsweise einer Laserschweißung, erfolgt ist.

Durch die erfindungsgemäß realisierte axiale Festlegung der Mitnehmerscheibe 3, 3' gegenüber dem Lamellenträger 2 wird in einer sehr platzsparenden und kostengünstigen Art und Weise ein betriebsbedingtes axiales Gleiten zwischen den Lastzähnen 20, 20' der Mitnehmerscheibe 3, 3' und den Aussparungen 13 des Lamellenträgers 2 und damit größerer Verschleiß an den betreffenden Kontaktflächen, speziell zwischen den umfangsseitigen Flanken 27 der Lastzähne 20, 20' und den umfangsseitigen Innenwänden 15 der Aussparungen 13 zuverlässig vermieden, das mit erhöhtem Zahnflankenspiel und verstärkter Geräuschentwicklung verbunden wäre.

### BEZUGSZEICHENLISTE

- 1: Lamellenkupplung
- 2: Lamellenträger
- 3: Mitnehmerscheibe
- 3': Mitnehmerscheibe
- 4: Sicherungsring
- 5: Nabe
- 6: Außenlamellenträger
- 7: Boden
- 8: Zylinderabschnitt
- 9: Axialnute
- 10: Axialsteg
- 10': (erster, zweiter) Axialsteg
- 10": (dritter) Axialsteg
- 11: Öffnung
- 12: Ringnut
- 13: Aussparung
- 14: axiale Innenwand
- 15: umfangsseitige Innenwand
- 16: verlängerter Bereich
- 17: Ringnut
- 18: Segment
- 19: Segment
- 20: (erster) Zahn, Lastzahn
- 20': (erster) Zahn, Lastzahn
- 21: (zweiter) Zahn, Lagerzahn
- 22: Lagerzunge
- 23: Seitenflanke
- 24: axiale Innenseite
- 25: axiale Außenseite
- 26: axiale Innenseite
- 27: umfangsseitige Flanke
- 28: Außenverzahnung
- 29: Lagerzapfen
- 30: umfangsseitige Erweiterung
- 31: Innenkeilfläche
- 32: Absatz
- 33: Außenzylinderfläche
- 34: Zentralbohrung
- 35: Innenzylinderfläche
- 36: Axialverschiebung
- 37: Kontaktbereich
- 38: Schweißung

## Patentansprüche

1. Kfz-Getriebe, mit einer schließ- und trennbaren Kupplung, die als Lamellenkupplung (1) ausgebildet ist, bei der ein Lamellenträger (2) an einem Zylinderabschnitt (8) lamellenseitig über den Umfang verteilt wechselweise Axialnuten (9) und Axialstege (10) aufweist und einseitig axial endseitig über eine Mitnehmerscheibe (3, 3') mit einer Nabe (5) in Verbindung steht, und bei der zur Übertragung eines Drehmomentes eine drehfeste Verbindung zwischen der Mitnehmerscheibe (3, 3') und dem Lamellenträger (2) über eine Steckverzahnung besteht, bei der am Außenumfang der Mitnehmerscheibe angeordnete radiale Zähne (20, 21) in korrespondierende radiale Ausnehmungen des Lamellenträgers hineinragen, **dadurch gekennzeichnet, dass** die Mitnehmerscheibe (3, 3') axial spielfrei mit dem Lamellenträger (2) verbunden ist, indem die Ausnehmungen des Lamellenträgers (2) als endseitig axial offene Aussparungen (13) ausgebildet sind, durch die Lastzähne (20, 20') der Mitnehmerscheibe (3, 3') radial hindurchgreifen und mit ihren axialen Innenseiten (24) anliegen, und indem der Lamellenträger (2) axial außen einen formschlüssig gelagerten Sicherungsring (4) aufweist, an dem Lagerzähne (21) der Mitnehmerscheibe (3, 3') mit ihren axialen Außenseiten (25) anliegen.

2. Kfz-Getriebe nach Anspruch 1, **dadurch gekennzeichnet, dass** zur Begrenzung der radialen Abmessungen der Lamellenkupplung (1) die Aussparungen (13) jeweils mittig in den lamellenseitigen Axialstegen (10') des Lamellenträgers (2) angeordnet sind.

3. Kfz-Getriebe nach Anspruch 1 oder 2, **dadurch gekennzeichnet, dass** zur Begrenzung der Belastung der Mitnehmerscheibe (3, 3') die Lagerzähne (21) jeweils aus zwei Lagerzungen (22) bestehen, die zur umfangsseitig benachbarten Anordnung an den Seitenflanken (23) jeweils eines lamellenseitigen Axialsteges (10") vorgesehen sind.

4. Kfz-Getriebe nach Anspruch 3, **dadurch gekennzeichnet, dass** zur Begrenzung der Belastung der Mitnehmerscheibe (3, 3') und des Lamellenträgers (2) die Mitnehmerscheibe (3, 3') zwischen den Lagerzungen (22) der Lagerzähne (21) jeweils keinen Lastzahn (20, 20') und der Lamellenträger (2) an den den Lagerzungen (22) der Lagerzähne (21) unmittelbar benachbarten Axialstegen (10") jeweils keine Aussparung (13) aufweist.

5. Kfz-Getriebe nach Anspruch 4, **dadurch gekennzeichnet, dass** zur gleichmäßigen Verteilung von Last- und Lagerkräften die Lastzähne (20, 20') und die Lagerzähne (21) wechselweise gleichmäßig über den Außenumfang der Mitnehmerscheibe (3, 3') verteilt sind.

6. Kfz-Getriebe nach Anspruch 5, **dadurch gekennzeichnet, dass** die Mitnehmerscheibe (3, 3') an ihrem Außenumfang anstelle jedes dritten Lastzahns (20, 20') jeweils einen Lagerzahn (21) aufweist.

7. Kfz-Getriebe nach einem der Ansprüche 3 bis 6, **dadurch gekennzeichnet, dass** die für die beidseitige Anordnung der Lagerzungen (22) vorgesehenen Axialstege (10") des Lamellenträgers (2) axial endseitig verlängert sind und in dem verlängerten Bereich (16) zur Aufnahme des Sicherungsrings (4) jeweils einen Abschnitt einer Ringnut (17) aufweisen.

8. Kfz-Getriebe nach einem der Ansprüche 1 bis 7, **dadurch gekennzeichnet, dass** zur Vermeidung von wärmedehnungsbedingtem Zahnflankenspiel die Lastzähne (20') der Mitnehmerscheibe (3') radial außen jeweils beidseitig umfangsseitige Erweiterungen (30) mit Innenkeilflächen (31) aufweisen, die bei einer Aufweitung des Lamellenträgers (2) zum Anliegen an die umfangsseitigen Innenwände (15) der Aussparungen (13) vorgesehen sind.

9. Kfz-Getriebe nach einem der Ansprüche 1 bis 8, **dadurch gekennzeichnet, dass** zur Axialjustierung der Mitnehmerscheibe (3, 3') auf der Nabe (5) die Nabe (5) einen Absatz (32) mit einer Außenzylinderfläche (33) und die Mitnehmerscheibe (3, 3') eine Zentralbohrung (34) mit einer korrespondierenden Innenzylinderfläche (35) aufweisen, und dass die Nabe (5) und die Mitnehmerscheibe (3, 3') in einer justierten Axialposition im Kontaktbereich (37) des Absatzes (32) und der Zentralbohrung (34) miteinander verschweißt sind.

10. Kfz-Getriebe nach einem der Ansprüche 1 bis 9, **dadurch gekennzeichnet, dass** das Getriebe als automatisiertes Schaltgetriebe mit einer Motorkupplung ausgebildet ist, und dass die Lamellenkupplung (1) als Motorkupplung Verwendung findet.

11. Kfz-Getriebe nach einem der Ansprüche 1 bis 9, **dadurch gekennzeichnet, dass** das Getriebe als automatisiertes Doppelkupplungsgetriebe mit zwei Motorkupplungen ausgebildet ist, und dass die Lamellenkupplung (1) als eine der Motorkupplungen Verwendung findet.

12. Kfz-Getriebe nach einem der Ansprüche 1 bis 9, **dadurch gekennzeichnet, dass** das Getriebe als Wandlerautomat mit mehreren Schaltelementen ausgebildet ist, und dass die Lamellenkupplung (1) als Schaltelement Verwendung findet.

## Claims

1. Motor-vehicle transmission, having a clutch which can be engaged and disengaged and is configured as a multiple-disc clutch (1), in which a multiple-disc carrier (2) has, on one cylinder section (8), axial grooves (9) and axial webs (10), in a manner which is distributed over the circumference alternately on the multiple-disc side, and is connected to a hub (5) via a driver plate (3, 3') axially at the end on one side, and in which there is a rotationally fixed connection between the driver plate (3, 3') and the multiple-disc carrier (2) via an intermeshing toothing system in order to transmit a torque, in which radial teeth (20, 21) which are arranged on the outer circumference of the driver plate protrude into corresponding radial recesses of the multiple-disc carrier, **characterized in that** the driver plate (3, 3') is axially connected to the multiple-disc carrier (2) in a manner which is free of play, by the recesses of the multiple-disc carrier (2) being configured as cut-outs (13) which are open axially at one end and through which loadbearing teeth (20, 20') of the driver plate (3, 3') extend radially and are in contact with their axial inner sides (24), and by the multiple-disc carrier (2) having, axially on the outside, a securing ring (4) which is mounted with a form-fitting connection and with which the axial outer sides (25) of bearing teeth (21) of the driver plate (3, 3') are in contact.

2. Motor-vehicle transmission according to Claim 1, **characterized in that**, in order to limit the radial dimensions of the multiple-disc clutch (1), the cut-outs (13) are arranged in each case centrally in the disc-side axial webs (10') of the multiple-disc carrier (2).

3. Motor-vehicle transmission according to Claim 1 or 2, **characterized in that**, in order to limit the loading of the driver plate (3, 3'), the bearing teeth (21) comprise in each case two bearing tongues (22) which are provided to be arranged circumferentially adjacent to one another on the lateral flanks (23) of in each case one disc-side axial web (10'').

4. Motor-vehicle transmission according to Claim 3, **characterized in that**, in order to limit the loading of the driver plate (3, 3') and the multiple-disc carrier (2), the driver plate (3, 3') has in each case no loadbearing tooth (20, 20') between the bearing tongues (22) of the bearing teeth (21), and the multiple-disc carrier (2) has in each case no cut-out (13) on the axial webs (10") which are directly adjacent to the bearing tongues (22) of the bearing teeth (21).

5. Motor-vehicle transmission according to Claim 4, **characterized in that**, in order to distribute loadbearing and bearing forces uniformly, the loadbearing teeth (20, 20') and the bearing teeth (21) are distributed alternately and uniformly over the outer circumference of the driver plate (3,3').

6. Motor-vehicle transmission according to Claim 5, **characterized in that**, on its outer circumference, the driver plate (3, 3') has in each case one bearing tooth (21) instead of each third loadbearing tooth (20, 20').

7. Motor-vehicle transmission according to one of Claims 3 to 6, **characterized in that** the axial webs (10") of the multiple-disc carrier (2) which are provided for the double-sided arrangement of the bearing tongues (22) are extended axially at the ends and have in each case one section of an annular groove (17) in the extended region (16) in order to accommodate the securing ring (4).

8. Motor-vehicle transmission according to one of Claims 1 to 7, **characterized in that**, in order to avoid tooth-flank play which is induced by thermal expansion, the loadbearing teeth (20') of the driver plate (3') have, radially on the outside and in each case on both sides, circumferential enlargements (30) with internal wedge faces (31) which, in the case of a widening of the multiple-disc carrier (2), are provided for contact on the circumferential inner walls (15) of the cut-outs (13).

9. Motor-vehicle transmission according to one of Claims 1 to 8, **characterized in that**, for the axial adjustment of the driver plate (3, 3') on the hub (5), the hub (5) has a shoulder (32) with an outer cylindrical face (33) and the driver plate (3, 3') has a central hole (34) with a corresponding inner cylindrical face (35), and **in that** the hub (5) and the driver plate (3, 3') are welded to one another in an adjusted axial position in the contact region (37) of the shoulder (32) and the central hole (34).

10. Motor-vehicle transmission according to one of Claims 1 to 9, **characterized in that** the transmission is configured as an automated change-speed gearbox with an engine clutch, and **in that** the multiple-disc clutch (1) is used as an engine clutch.

11. Motor-vehicle transmission according to one of Claims 1 to 9, **characterized in that** the transmission is configured as an automated dual-clutch transmission with two engine clutches, and **in that** the multiple-disc clutch (1) is used as one of the engine clutches.

12. Motor-vehicle transmission according to one of Claims 1 to 9, **characterized in that** the transmission is configured as an automatic converter with a plurality of switching elements, and **in that** the multiple-disc clutch (1) is used as a switching element.

## Revendications

1. Transmission de véhicule, comportant un embrayage fermable et dissociable, qui est configurée comme un embrayage à multi-disques (1), dans lequel un support de multi-disques (2) sur un tronçon de cylindre (8) présente du côté des multi-disques des rainures axiales (9) et des méplats axiaux (10) répartis en alternance sur la circonférence et est en liaison d'un côté du côté d'extrémité axiale avec un bossage (5) par l'intermédiaire d'un disque d'entraînement (3, 3') et dans lequel, pour transmettre un couple de rotation, une liaison solidaire en rotation entre le disque d'entraînement (3, 3') et le support de multi-disques (2) est constituée par l'intermédiaire d'une cannelure, dans lequel des dents (20, 21) radiales disposées sur la circonférence externe du disque d'entraînement saillent dans des évidements radiaux correspondants du support de multi-disques, **caractérisée en ce que** le disque d'entraînement (3, 3') est relié axialement sans jeu au support de multi-disques (2), **en ce que** les évidements du support de multi-disques (2) sont configurés comme des cavités (13) ouvertes axialement du côté d'extrémité, à travers lesquelles des dents de charge (20, 20') du disque d'entraînement (3, 3') s'engrènent radialement et reposent par leurs côtés internes axiaux (24) et **en ce que** le support de multi-disques (2) présente un anneau d'arrêt (4) positionné par emboîtement axialement vers l'extérieur, sur lequel des dents d'appui (21) du disque d'entraînement (3, 3') reposent par leurs côtés externes axiaux (25).

2. Transmission de véhicule selon la revendication 1, **caractérisée en ce que**, pour limiter les dimensions radiales de l'embrayage à multi-disques (1), les cavités (13) sont respectivement disposées au centre sur les méplats axiaux (10') du côté des multi-disques du support de multi-disques (2).

3. Transmission, de véhicule selon la revendication 1 ou 2, **caractérisée en ce que**, pour limiter la charge du disque d'entraînement (3, 3'), les dents d'âppui (21) sont respectivement constituées de deux languettes d'appui (22), qui sont respectivement prévues en disposition contiguë du côté de la circonférence sur les flancs latéraux (23) d'un méplat axial (10") du côté des multi-disques.

4. Transmission de véhicule selon la revendication 3, **caractérisée en ce que**, pour limiter la charge du disque d'entraînement (3, 3') et du support de multi-disques (2), le disque d'entraînement (3, 3') ne présente respectivement aucune dent de charge (20, 20') entre les languettes d'appui (22) des dents d'appui (21) et le support de multi-disques (2) ne présente respectivement aucun évidement (13) sur les méplats axiaux (10'') à proximité immédiate des languettes d'appui (22) des dents d'appui (21).

5. Transmission de véhicule selon la revendication 4, **caractérisée en ce que**, pour répartir uniformément les forces de charge et d'appui, les dents de charge (20, 20') et les dents d'appui (21) sont réparties régulièrement de manière alternée sur la circonférence externe du disque d'entraînement (3, 3').

6. Transmission de véhicule selon la revendication 5, **caractérisée en ce que** le disque d'entraînement (3, 3') présente sur sa circonférence externe une dent d'appui (21) respective à la place de chaque troisième dent de charge (20, 20').

7. Transmission de véhicule selon une des revendications 3 à 6, **caractérisée en ce que** les méplats axiaux (10") du support de multi-disques (2) prévus pour l'agencement des languettes d'appui (22) des deux côtés sont prolongés axialement du côté d'extrémité et présentent dans la zone allongée (16) une section respective d'une rainure annulaire (17) pour recevoir l'anneau d'arrêt (4).

8. Transmission de véhicule selon une des revendications 1 à 7, **caractérisée en ce que**, pour éviter un jeu entre les flancs de dents provoqué par la dilatation thermique, les dents de charge (20') du disque d'entraînement (3') présentent radialement vers l'extérieur des deux côtés de la circonférence des évasements (30) respectifs comportant des surfaces de coin internes (31), qui sont prévus pour reposer sur les parois internes (15) des cavités (13) du côté de la circonférence, lors d'une dilatation du support de multi-disques (2).

9. Transmission de véhicule selon une des revendications 1 à 8, **caractérisée en ce que**, pour ajuster axialement le disque d'entraînement (3, 3') sur le bossage (5), le bossage (5) présente un prolongement (32) comportant une surface cylindrique extérieure (33) et le disque d'entraînement (3, 3') présente un alésage central (34) comportant une surface cylindrique intérieure (35) correspondante et **en ce que** le bossage (5) et le disque d'entraînement (3, 3') sont soudés l'un à l'autre dans une position axiale ajustée dans la zone de contact (37) du prolongement (32) et de l'alésage central (34).

10. Transmission de véhicule selon une des revendications 1 à 9, **caractérisée en ce que** la transmission est conçue comme une boîte de vitesses automatique avec un embrayage moteur et **en ce que** l'embrayage à multi-disques (1) constitue l'embrayage moteur.

11. Transmission de véhicule selon une des revendications 1 à 9, **caractérisée en ce que** la transmission est conçue comme une transmission automatique à double embrayage avec deux embrayages moteur et **en ce que** l'embrayage à multi-disques (1) constitue un des embrayages moteur.

12. Transmission de véhicule selon une des revendications 1 à 9, **caractérisée en ce que** la transmission est conçue comme une transmission automatique avec plusieurs éléments de commutation et **en ce que** l'embrayage à multi-disques (1) constitue un élément de commutation.
